# EUROPEAN PATENT APPLICATION

(11) **EP 2 670 141 A1**
(43) Date of publication of application: **04.12.2013**
(21) Application number: 11852257.2
(22) Date of filing: 15.12.2011
(51) Int. Cl.: H04N 7/32

(54) **VIDEO ENCODING DEVICE, VIDEO DECODING DEVICE, VIDEO ENCODING METHOD, VIDEO DECODING METHOD, AND PROGRAM**

(30) Priority: 27.12.2010 JP 2010290968
(71) Applicant: NEC Corporation, Tokyo 108-8001 (JP)
(72) Inventor: CHONO, Keiichi, Tokyo 108-8001 (JP)
(74) Representative: Vossius & Partner
(86) International application number: PCT/JP2011/007011
(87) International publication number: WO 2012/090413

(57) **Abstract**

A video encoding device includes an intra prediction unit for performing intra prediction on an image, a frequency transform/quantization unit for frequency transform and quantizing a prediction error based on the intra prediction performed by the intra prediction unit, an entropy encoding unit for entropy-encoding a transform quantization value generated by the frequency transform/quantization unit, an edge detection unit for detecting edge information on an image block of the minimum frequency-transform block size of the image, and edge information storage unit for storing the edge information detected by the edge detection unit.

## Description

### Technical Field

The present invention relates to a video encoding device to which a video encoding technique using edge information is applied, and a video decoding device.

### Background Art

In general, a video encoding device executes, on a digitized video signal, an encoding process that conforms to a predetermined video coding scheme to generate coded data, i.e. a bitstream.

As the predetermined coding scheme, there is ISO/IEC 14496-10 Advanced Video Coding (AVC) described in Non Patent Literature (NPL) 1. As a reference model of an AVC encoder, Joint Model scheme is known (hereafter, a video encoding device that conforms to the AVC scheme is called a typical video encoding device).

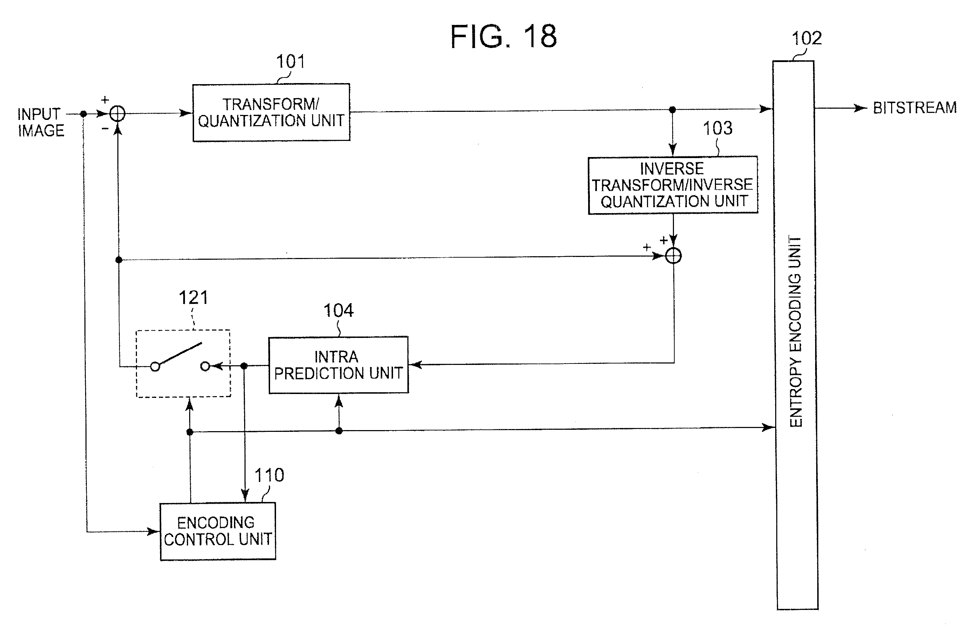

Referring to FIG. 18, the structure and operation of the typical video encoding device that receives each frame of digitized video as input and outputs a bitstream is described.

As shown in FIG. 18, the typical video encoding device includes a transform/quantization unit 101, an entropy encoding unit 102, an inverse transform/inverse quantization unit 103, an intra prediction unit 104, an encoding control unit 110, and a switch 121.

The typical video encoding device divides each frame into blocks of 16×16 pixel size called macro blocks (MBs), and further divides each MB into blocks of 4×4 pixel size to set the 4×4 block as the minimum unit of encoding.

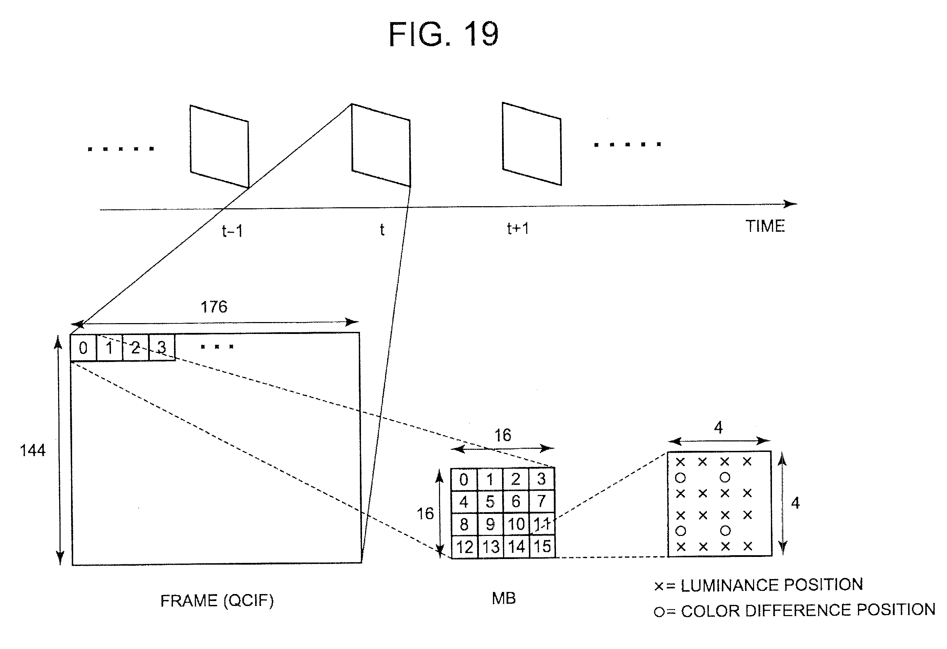

FIG. 19 is an explanatory diagram showing an example of block division in the case where the frame has a spatial resolution of QCIF (Quarter Common Intermediate Format). The following describes the operation of each unit while focusing only on pixel values of luminance for simplicity's sake.

A prediction signal supplied from the intra prediction unit 104 through the switch 121 is subtracted from an input image of each MB of input video. The input video from which the prediction signal is subtracted is called a prediction error below.

The intra prediction unit 104 generates an intra prediction signal using a reconstructed image having the same display time as a current frame. The MB encoded using the intra prediction signal is called an intra MB below.

Referring to 8.3.1 Intra_4x4 prediction process for luma samples, 8.3.2 Intra_8x8 prediction process for luma samples, and 8.3.3 Intra_16x16 prediction process for luma samples in NPL 1, three types of intra prediction modes (Intra_4×4, Intra_8×8, and Intra_16×16) are available.

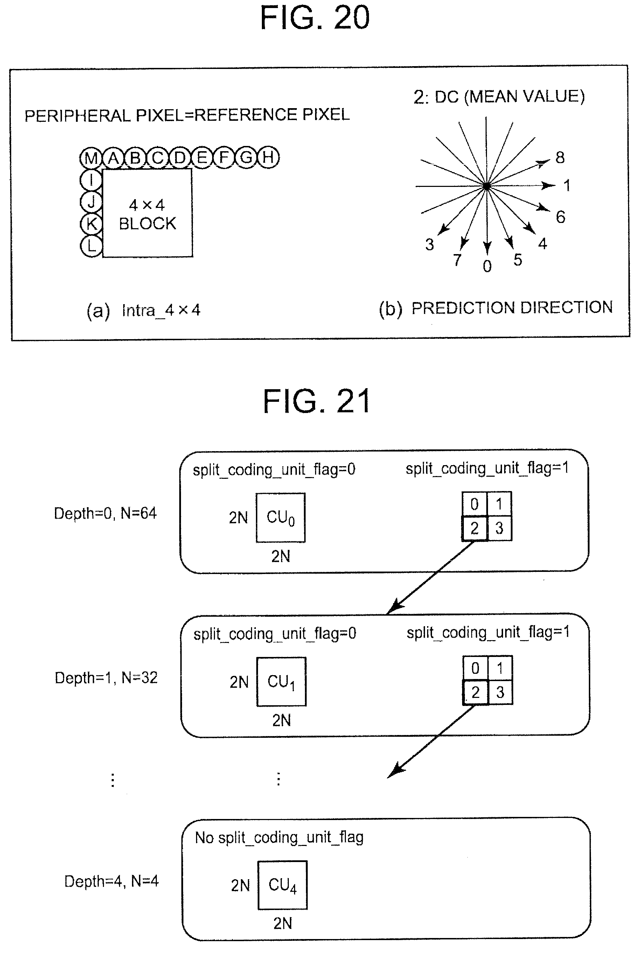

As an example, Intra_4×4 is described with reference to FIG. 20. Each circle (o) in (a) of FIG. 20 represents a reference pixel used for intra prediction, i.e. a pixel of the reconstructed picture having the same display time as the current picture. In intra prediction of Intra_4×4, reconstructed peripheral pixels are directly set as reference pixels, each of which is used for padding (extrapolation) in any one of nine directions shown in (b) of FIG. 20 to form a prediction signal. The direction of extrapolation is called the intra prediction direction below.

The encoding control unit 110 compares the nine types of intra prediction signals with each MB signal of input video, selects an intra prediction direction that minimizes the energy of the prediction error, and causes the intra prediction unit to supply the intra prediction signal of the selected intra direction to the switch 121. The selected intra prediction mode and information associated with the intra prediction direction are supplied to the entropy encoding unit 102.

The transform/quantization unit 101 frequency-transforms the prediction error based on the discrete cosine transform of 4 × 4 or 8 × 8. The transform/quantization unit 101 further quantizes, with a predetermined quantization step width Qs, a prediction error image (frequency transform coefficient) obtained by the frequency-transform. The quantized frequency transform coefficient is called a transform quantization value below.

The entropy encoding unit 102 entropy-encodes the intra prediction mode and the intra prediction direction supplied from the encoding control unit 110, and the transform quantization value supplied from the transform/quantization unit 101.

The inverse transform/inverse quantization unit 103 inverse-quantizes the transform quantization value with the quantization step width Qs. Based on the discrete cosine transform of 4 × 4 or 8 × 8, the inverse transform/inverse quantization unit 103 further performs inverse frequency transform of the frequency transform coefficient obtained by the inverse quantization. The prediction signal is added to the reconstructed prediction error image obtained by the inverse frequency transform, and set as a reconstructed image.

Based on the operation described above, the typical video encoding device generates a bitstream.

### Citation List

### Patent Literatures

PTL 1: Japanese Patent No. 4509104
PTL 2: Published Japanese Translation of a PCT Application No. 2010-508684
PTL 3: Japanese Patent Application Laid-Open No. 2007-166617
PTL 4: Japanese Patent No. 4555758
PTL 5: Japanese Patent Application Laid-Open No. 2009-111691

### Non Patent Literatures

NPL 1: ISO/IEC 14496-10 Advanced Video Coding
NPL 2: "Test Model under Consideration," Document: JCTVC-B205, Joint Collaborative Team on Video Coding (JCT-VC) of ITU-T SG16 WP3 and ISO/IEC JTC1/SC29/WG11 2nd Meeting: Geneva, CH, 21-28 July, 2010

### Summary of Invention

### Technical Problem

As described in NPL 2, there is video coding using hierarchical coding units (Coding Tree Block (CTBs)) whose unit of encoding is variable as shown in FIG. 21 (hereinafter called the Test Model under Consideration scheme (TMuC scheme)). Here, the largest CTB is called the Largest Coding Tree Block (LCTB), and the smallest CTB is called the Smallest Coding Tree Block (SCTB). A CTB block is called a Coding Unit (CU) below. Thus, the LCTB is called the LCU (Largest Coding Unit), and the SCTB is called the SCU (Smallest Coding Unit).

In the TMuC scheme, the concept of Prediction Unit (PU) is introduced as a unit of prediction for each CTB as shown in FIG. 22. Further, in the TMuC scheme, much more types of intra prediction directions are supported. For example, as shown in a conceptual diagram of FIG. 23, 33 types of intra prediction directions (a total of 33 types, with 16 types indicated by the solid lines on the right side of the lower right diagonal indicated by the broken line, and 16 types indicated by the solid lines on the left side of the broken line) other than DC are supported in 8×8 intra PU partitions (34 types including DC in total). 17 types are supported in 4×4 intra PU partitions, 34 types are supported in 16×16 and 32×32 intra PU partitions, and five types are supported in 64x64 intra PU partitions.

Like the encoding control unit 110 in the typical video encoding device, if all types (the number of intra PU partitions × intra prediction directions) of intra prediction signals are compared with each MB signal of input video in video coding based on the TMuC scheme to select an intra prediction direction that minimizes the energy of the prediction error, there will arise a problem that a computation of the encoding control unit 110 increases.

Further, in video coding based on the TMuC scheme, since the number of intra prediction directions is large, there arises another problem that the percentage of the coded bit amount of information associated with each intra prediction direction in the bitstream increases.

As conventional techniques for reducing a computation of the encoding control unit 110, there are techniques described in PTL 1 to PTL 4. In PTL 1 to PTL 4, high-speed determination methods for intra prediction mode to determine an intra prediction direction based on edge information on an intra block to be encoded are described.

PTL 1 and PTL 2 disclose exemplary embodiments using an edge direction histogram and gradient activities as edge information, respectively. PTL 3 discloses an exemplary embodiment using, as edge information, frequency transform coefficient information on an intra block to be encoded. PTL 4 discloses a high-speed determination method for intra prediction mode using an estimated sum of prediction blocks determined by mathematic functions of the sum of pixels of an intra block to be encoded and peripheral boundary pixels.

According to the techniques disclosed in these documents, the computation of the encoding control unit 110 can be reduced, but the problem that the coded bit amount of the intra prediction direction increases is not solved.

As techniques for reducing the percentage of the coded bit amount of the intra prediction direction in a bitstream, there are techniques disclosed in PTL 5 and 9.5 Edge based prediction of NPL 2. PTL 5 and NPL 2 disclose exemplary embodiments for using edge information on blocks adjacent to an intra block to be encoded to determine an intra prediction direction used to encode the intra block to be encoded. According to these techniques, the coded bit amount of the intra prediction direction can be reduced, but the problem that the computation of the encoding control unit 110 increases is not solved.

Even if the technique for reducing the computation of the encoding control unit 110 and the technique for reducing the coded bit amount of the intra prediction direction described above are simply combined, the TMuC scheme cannot solve both the problem that the computation of the encoding control unit 110 increases and the problem that the coded bit amount of the intra prediction direction increases properly. This is because the unit of encoding is variable in the TMuC scheme. In general, since a lot of coding noise is generated in a reconstructed image at a block boundary position, it is not preferred to use edge information at the block boundary position in order to determine an intra prediction direction used to encode the intra block to be encoded. In the TMuC scheme, since block boundary positions associated with intra prediction and frequency transform are not determined until the split block shape of CU is determined, memory allocation for storing edge information on non-block boundary positions is not determined.

Therefore, in a simple combination of the techniques disclosed in aforementioned PTLs and NPLs, it is necessary to control the memory allocation and the edge information calculation depending on the split block shape of CU. In other words, if edge information on non-block boundary positions is used to reduce the coded bit amount of the intra prediction direction in a simple combination of the above-mentioned techniques, the memory allocation of edge information and the edge information calculation will be complicated, causing the problem that the computation of the encoding control unit 110 increases.

### Solution to Problem

A video encoding device according to the present invention includes: intra prediction means for performing intra prediction on an image; frequency transform/quantization means for frequency-transforming and quantizing a prediction error based on the intra prediction performed by the intra prediction means; entropy encoding means for entropy-encoding a transform quantization value generated by the frequency transform/quantization means; edge detection means for detecting edge information on an image block of the minimum frequency-transform block size of the image; and edge information storage means for storing the edge information detected by the edge detection means.

A video decoding device according to the present invention includes: entropy decoding means for entropy-decoding a transform quantization value; inverse quantization/inverse frequency transform means for inverse-quantizing the transform quantization value and performing inverse frequency transform thereof; intra prediction means for performing intra prediction on an image; edge detection means for detecting edge information on an image block of the minimum frequency-transform block size of the image; and intra prediction direction selecting means for selecting an intra prediction direction used to decode a block to be decoded, based on the edge information detected by the edge detection means.

A video encoding method according to the present invention includes: performing intra prediction on an image; frequency-transforming and quantizing a prediction error based on the intra prediction to generate a transform quantization value; entropy-encoding the transform quantization value; detecting edge information on an image block of the minimum frequency-transform block size of the image; and storing the detected edge information in edge information storage means.

A video decoding method according to the present invention includes: entropy-decoding a transform quantization value; inverse-quantizing the transform quantization value and performing inverse frequency transform thereof; performing intra prediction on an image; detecting edge information on an image block of the minimum frequency-transform block size of the image; and selecting an intra prediction direction used to decode a block to be decoded, based on the detected edge information.

A video encoding program according to the present invention causes a computer to execute: a process of performing intra prediction on an image; a process of frequency-transforming and quantizing a prediction error based on the intra prediction to generate a transform quantization value; a process of entropy-encoding the transform quantization value; a process of detecting edge information on an image block of the minimum frequency-transform block size of the image; and a process of storing the detected edge information in edge information storage means.

A video decoding program according to the present invention causes a computer to execute: a process of entropy-decoding a transform quantization value; a process of inverse-quantizing the transform quantization value and performing inverse frequency transform thereof; a process of performing intra prediction on an image; a process of detecting edge information on an image block of the minimum frequency-transform block size of the image; and a process of selecting an intra prediction direction used to decode a block to be decoded, based on the detected edge information.

### Advantageous Effects of Invention

According to the present invention, both the reduction in a computation of an encoding control unit and the reduction in the coded bit amount of an intra prediction direction can be satisfied properly in a video encoding scheme in which the unit of encoding is variable.

### Brief Description of Drawings

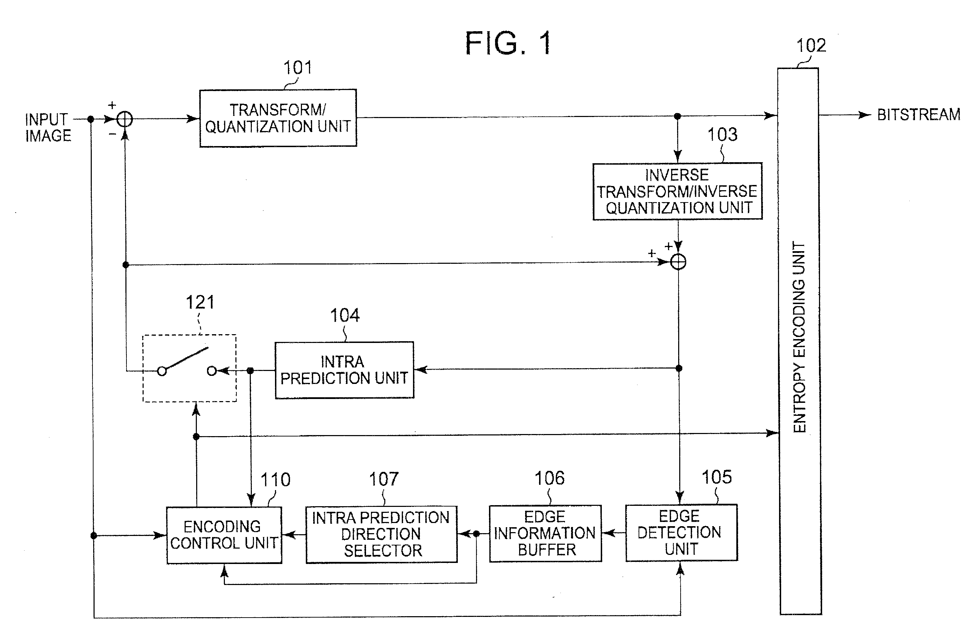

FIG. 1 is a block diagram of a video encoding device in Exemplary Embodiment 1.

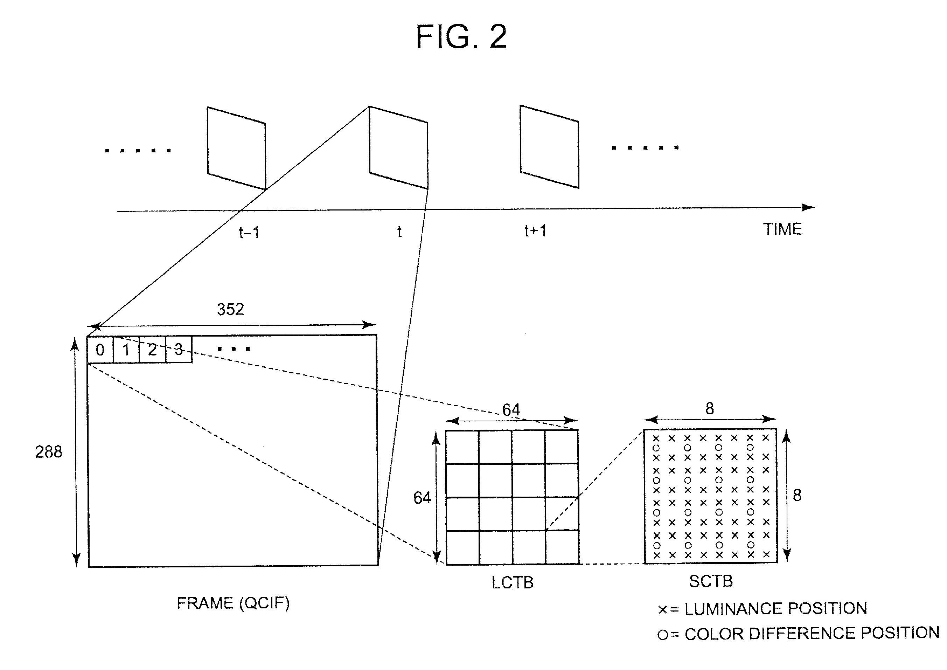

FIG. 2 is an explanatory diagram of an example of a frame and a block size.

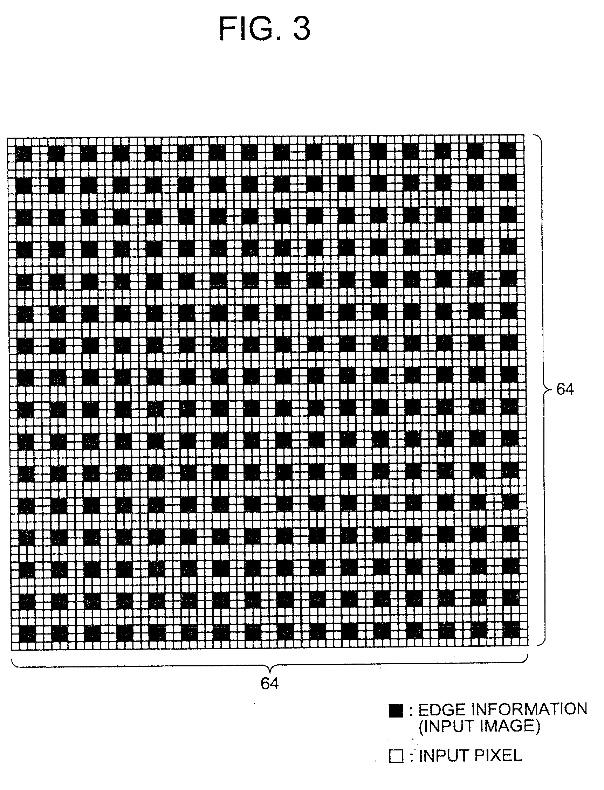

FIG. 3 is an explanatory diagram showing the positions of edge information relative to an input image of 64×64 LCU.

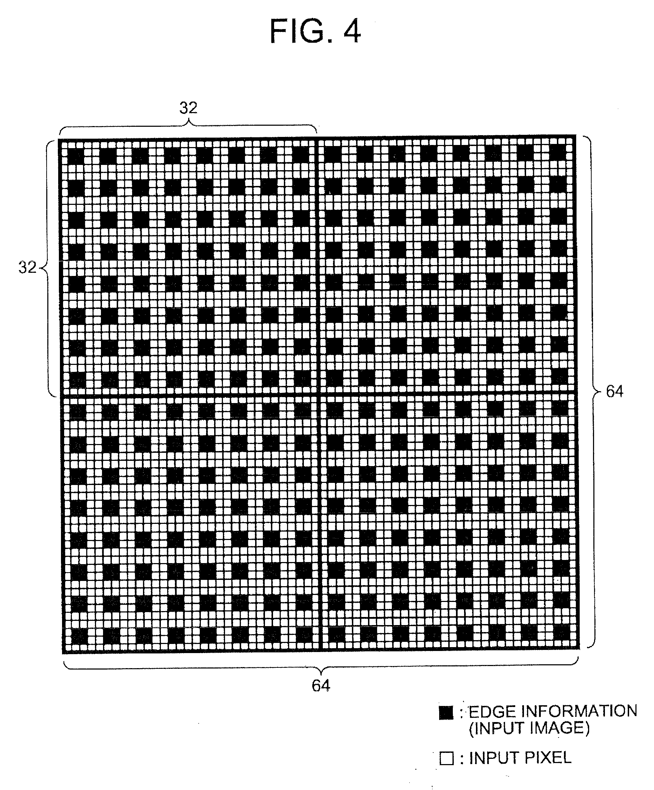

FIG. 4 is an explanatory diagram showing the positions of edge information when 2N×2N LCU is divided into four N×N CUs.

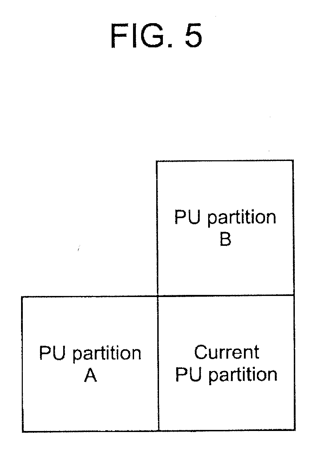

FIG. 5 is an explanatory diagram showing a positional relationship with a leftwardly adjacent PU partition and an upwardly adjacent PU partition.

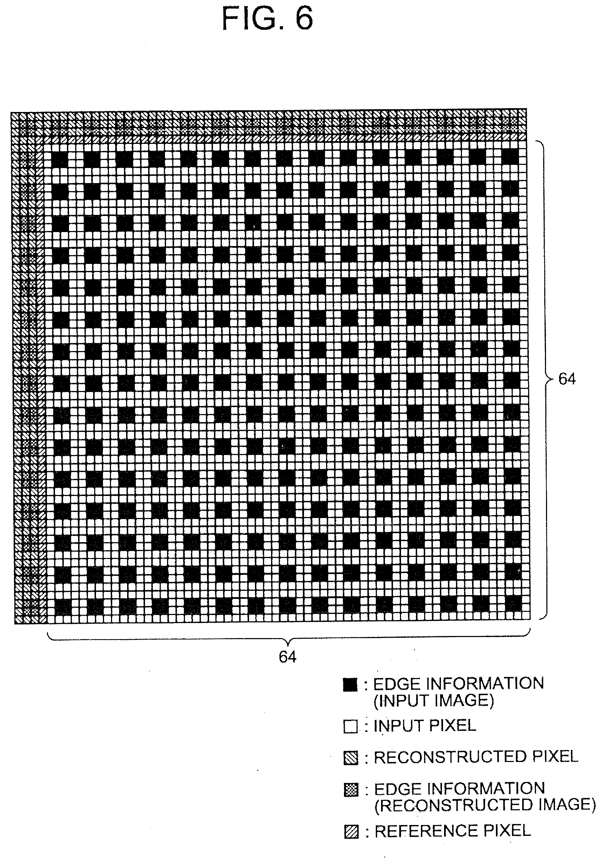

FIG. 6 is an explanatory diagram showing the positions of edge information used to select intra prediction directions of 64×64 intra PU partitions.

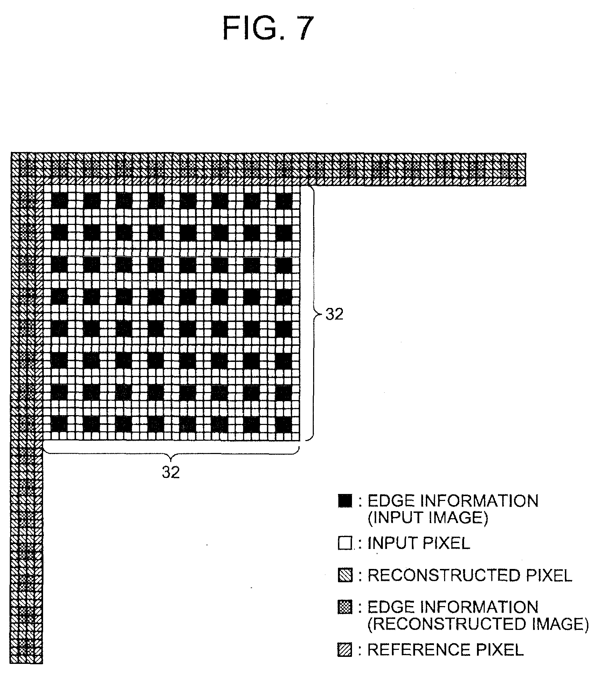

FIG. 7 is an explanatory diagram showing the positions of edge information used to select intra prediction directions of 32×32 intra PU partitions.

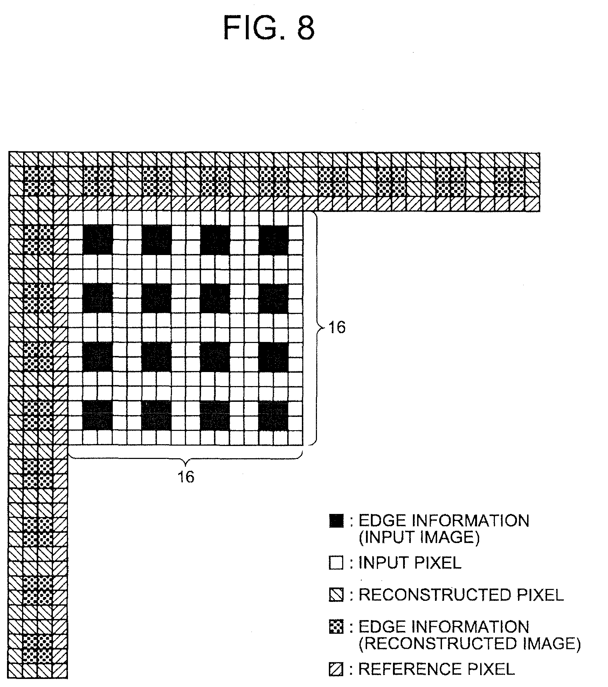

FIG. 8 is an explanatory diagram showing the positions of edge information used to select intra prediction directions of 16×16 intra PU partitions.

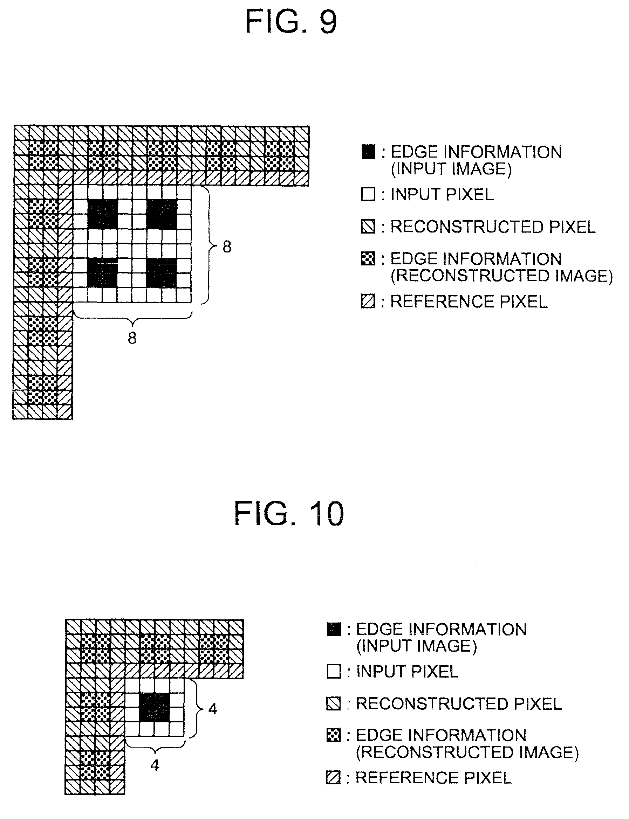

FIG. 9 is an explanatory diagram showing the positions of edge information used to select intra prediction directions of 8×8 intra PU partitions.
FIG. 10 is an explanatory diagram showing the positions of edge information used to select intra prediction directions of 4×4 intra PU partitions.

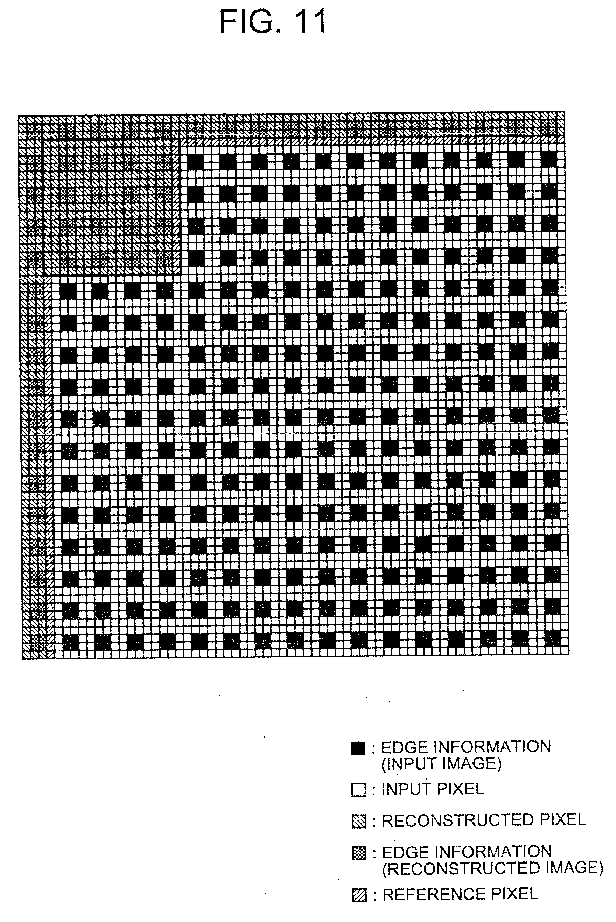

FIG. 11 is an explanatory diagram showing edge information stored in an edge information buffer after top-left 16×16 intra PU partitions in an LCU is reconstructed.

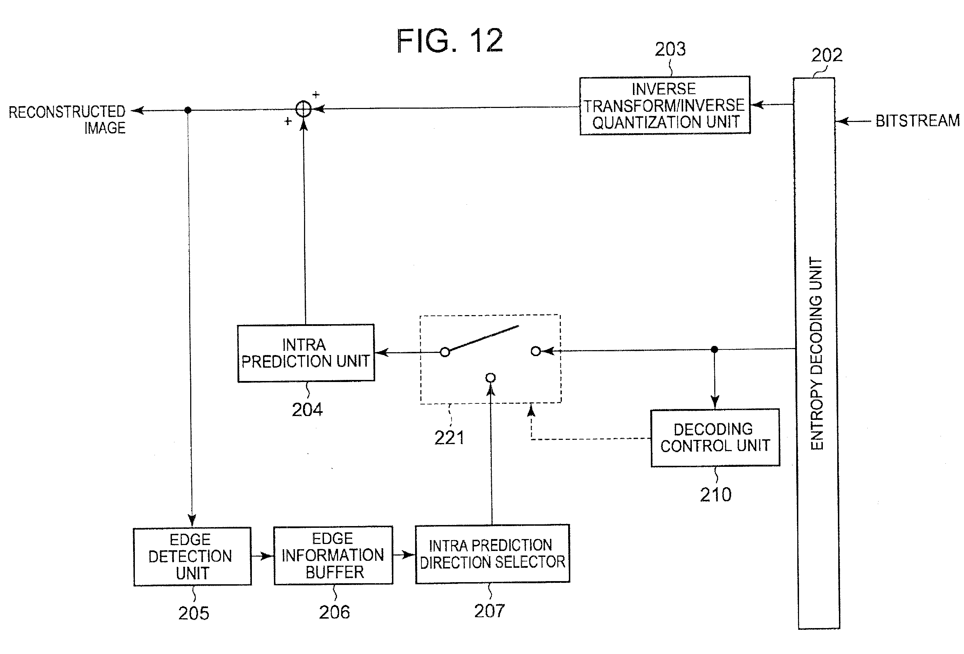

FIG. 12 is a block diagram of a video decoding device in Exemplary Embodiment 3.

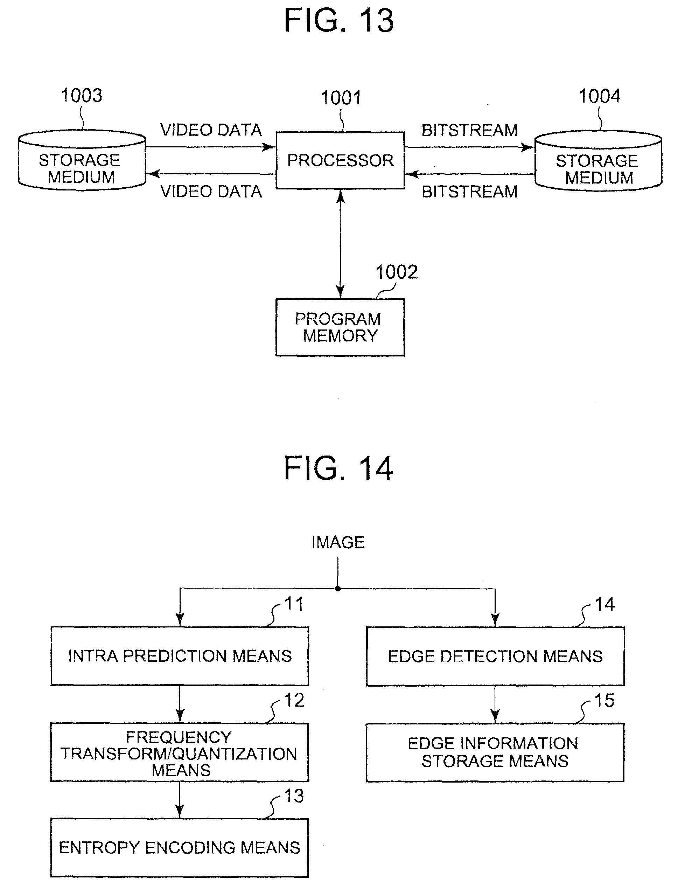

FIG. 13 is a block diagram showing a configuration example of an information processing system capable of implementing the functions of a video encoding device and a video decoding device according to the present invention.
FIG. 14 is a block diagram showing a main part of a video encoding device according to the present invention.

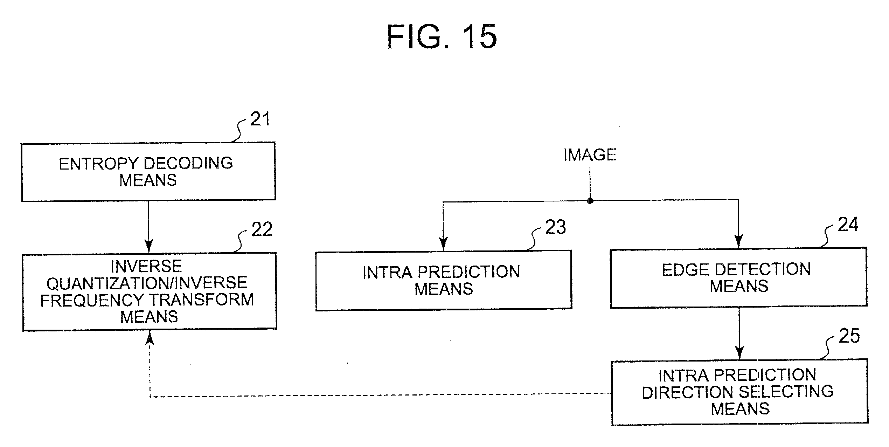

FIG. 15 is a block diagram showing a main part of a video decoding device according to the present invention.

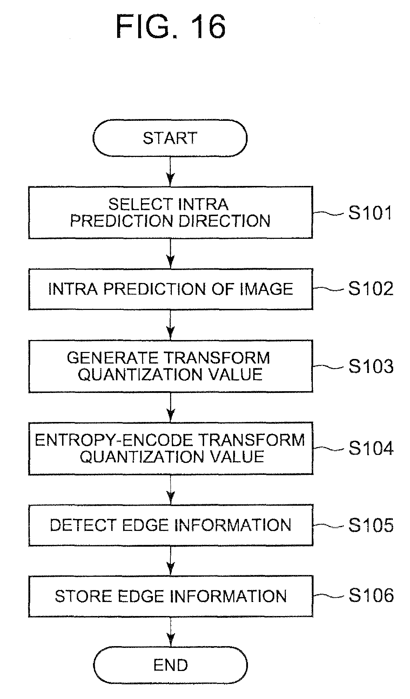

FIG. 16 is a flowchart showing processing performed by the video encoding device according to the present invention.

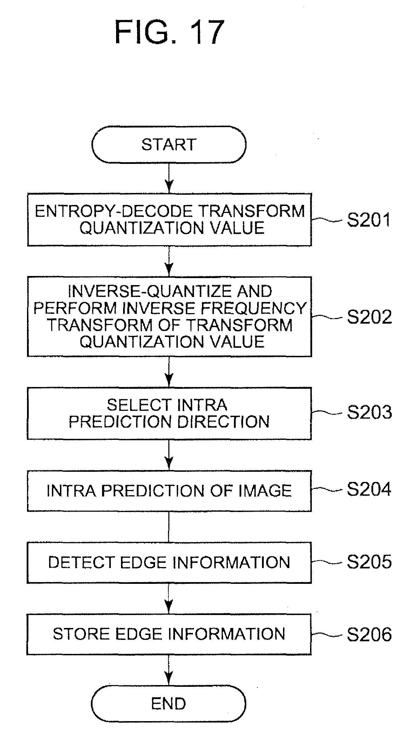

FIG. 17 is a flowchart showing processing performed by the video decoding device according to the present invention.
FIG. 18 is a block diagram of a typical video encoding device.
FIG. 19 is an explanatory diagram showing an example of block division when the spatial resolution of a frame is QCIF.
FIG. 20 is an explanatory diagram showing intra prediction of Intra_4×4.
FIG. 21 is an explanatory diagram showing a CTB.

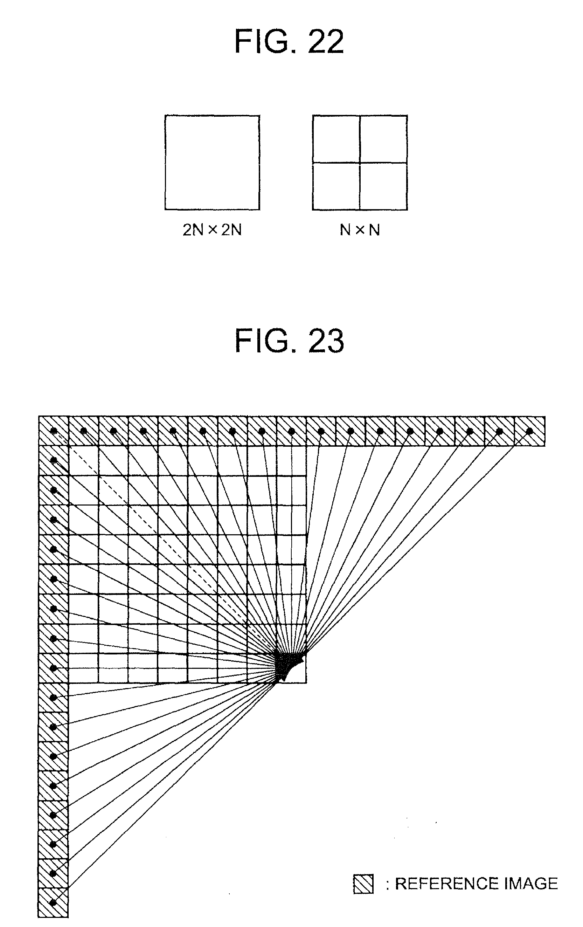

FIG. 22 is an explanatory diagram showing PU partitions of intra prediction.
FIG. 23 is a conceptual diagram of intra prediction directions in 8×8 intra PU partitions.

### Description of Embodiments

### Exemplary Embodiment 1

FIG. 1 is a block diagram showing a video encoding device in Exemplary Embodiment 1. In comparison with the typical video encoding device shown in FIG. 18, the video encoding device in this exemplary embodiment includes an edge detection unit 105, an edge information buffer 106, and an intra prediction direction selector 107 in addition to the transform/quantization unit 101, the entropy encoding unit 102, the inverse transform/inverse quantization unit 103, the intra prediction unit 104, the encoding control unit 110, and the switch 121.

The following describes the operation of the video encoding device in the exemplary embodiment by taking, as an example, a case where the LCU size is 64 × 64, the SCU size is 8 × 8, and the minimum frequency-transform block size is 4 × 4 (see FIG. 2).

An input image of each LCU of input video is supplied to the edge detection unit 105. The edge detection unit 105 divides the input image of the LCU into blocks of the minimum frequency-transform block size (4x4 block size), detects edge information on a position corresponding to the inside of each 4×4 block (2×2 pixel), and supplies the result to the edge information buffer 106.

FIG. 3 illustrates the positions of the edge information relative to the input image of the 64x64 LCU. As shown in FIG. 3, when the LCU size is 64 × 64, edge information on 256 (= 64×64/16) 2×2 blocks is detected. The edge information is the normal vector of a gradient vector to be described below. The gradient vector SrcGrad [x,y] = (HSrcEdge [x,y], VSrcEdge[x,y]) of the input image is determined by HSrcEdge[x,y] and VSrcEdge[x,y] as a result of applying Sobel operators to the input image (specifically, each pixel value of the input image) Src[x,y] (0 ≤ x ≤ 63, 0 ≤ y ≤ 63) in horizontal and vertical directions, respectively. In the exemplary embodiment, it is assumed that the angle of the normal vector is quantized by a predetermined angle, e.g., 5.45 degrees (180 degrees/33 directions).

The edge information buffer 106 stores edge information SrcNormal[x,y] on the input image supplied from the edge detection unit 105, and edge information RecNormal[x,y] on a reconstructed image supplied from the edge detection unit 105 to be described later. Since the number of pieces of edge information corresponding to the predetermined position (x,y) is one, the edge information buffer 106 overwrites the edge information SrcNormal[x,y] on the input image with the edge information RecNormal [x,y] on the reconstructed image.

The encoding control unit 110 uses the edge information SrcNormal[x,y] on the input image of the LCU to be encoded to determine a split block shape of the LCU. The encoding control unit 110 divides the LCU equally in quarters (see FIG. 4), and calculates a mode (mode value) of edge information belonging to each CU. FIG. 4 illustrates the positions of the edge information used when a 2N×2N LCU (64 × 64 in the exemplary embodiment) is divided into four N×N (32×32) CUs.

When the modes of the edge information on the four CUs are identical, the encoding control unit 110 determines not to divide the LCU. When the modes of the edge information on the four CUs are not identical, the encoding control unit 110 determines to divide the LCU into four CUs. The encoding control unit 110 applies similar processing to hierarchically divided CUs to determine the split block shape of the LCU.

Input images of PU partitions of the CU corresponding to the split block shape determined by the encoding control unit 110 are supplied to the encoding control unit 110. The encoding control unit 110 compares the input images of the PU partitions with an intra prediction signal, corresponding to at most seven types of intra prediction directions to be described later, supplied from the intra prediction direction selector 107 to determine an intra prediction direction that minimizes the energy of the prediction error.

The encoding control unit 110 causes the intra prediction unit 104 to supply the intra prediction signal of the determined intra direction to the switch 121. The selected split block shape (split_coding_unit_flag, mode_table_idx, and intra_split_flag) of the LCU, and information (prev_intra_luma_pred_flag and rem_intra_luma_pred_mode) associated with the intra prediction direction are supplied to the entropy encoding unit 102. Note that split_coding_unit_flag, mode_table_idx, intra_split_flag, prev_intra_luma_pred_flag, and rem intra_luma_pred_mode are syntaxes in the CU layer and the PU layer described in 4.1.9 Coding unit syntax and 4.1.10 Prediction unit syntax of NPL 2.

The intra prediction direction selector 107 selects four categories of intra prediction directions. A first category is one intra prediction direction smaller in IntraPredMode[ puPartIdx ] between the intra prediction direction of a PU partition A leftwardly adjacent to a PU partition (Current PU partition) to be predicted and an upwardly adjacent PU partition B shown in FIG. 5. Note that IntraPredMode[ puPartIdx ] is the number of an intra prediction mode corresponding to the intra prediction direction described in Table 5-1 Specification of IntraPredMode[ puPartIdx ] and associated names of NPL 2.

A second category is one intra prediction direction corresponding to the mode of edge information RecNormal [x,y] adjacent to the PU partition. Since RecNormal [x,y] is information obtained based on a reconstructed image (specifically, each pixel value of the reconstructed image) Rec [x,y] positioned inside of each block of the minimum frequency-transform block size, i.e., since RecNormal[x,y] is information not based on a reconstructed image Rec [x,y] positioned on the block boundary, the influence of a block distortion is avoided.

A third category is one intra prediction direction corresponding to the mode of edge information SrcNormal[x,y] on the input image of the PU partition.

A fourth category contains a total of four intra prediction directions, i.e. DC, horizontal, vertical, and lower right diagonal, more common in image characteristics.

In other words, the total of intra prediction direction types in all the categories selected by the intra prediction direction selector 107 are seven types at most.

The positions of edge information used to determine the intra prediction directions in the third category and the fourth category for each of the PU partition sizes 64 × 64, 32 × 32, 16 × 16, 8 × 8, and 4 × 4 are shown in FIG. 6 to FIG. 10, respectively. Note that edge information on positions where there is no reconstructed image is not used in determining the fourth intra prediction directions.

The intra prediction unit 104 generates an intra prediction signal of the intra prediction direction determined by the encoding control unit 110.

The prediction signal supplied from the intra prediction unit 104 through the switch 121 is subtracted from the input image of the PU partition. The transform/quantization unit 101 frequency-transforms the prediction error based on either one of the discrete cosine transforms of 4 × 4, 8 × 8, 16 × 16, 32 × 32, and 64 × 64 less than or equal to the size of the CU to be encoded. The transform/quantization unit 101 further quantizes, with a predetermined quantization step width Qs, a prediction error image (frequency transform coefficient) obtained by the frequency transform to generate a transform quantization value.

The entropy encoding unit 102 entropy-encodes the intra prediction mode and the intra prediction direction supplied from the encoding control unit 110, and the transform quantization value supplied from the transform/quantization unit 101. Information on the block size of discrete cosine transform (split_transform_unit_flag described in 4.1.11 Transform unit syntax of NPL 2) is also entropy-encoded.

The inverse transform/inverse quantization unit 103 inverse-quantizes the transform quantization value with the quantization step width Qs. The inverse transform/inverse quantization unit 103 further performs inverse frequency transform of the frequency transform coefficient obtained by the inverse quantization based on either one of the discrete cosine transforms of 4 × 4, 8 × 8, 16 × 16, 32 × 32, and 64 × 64 less than or equal to the size of the CU to be encoded. The prediction signal is added to the reconstructed prediction error image obtained by the inverse frequency transform to form a reconstructed image.

For encoding the subsequent input image, the edge detection unit 105 divides a reconstructed image Rec[x,y] corresponding to input video of the PU partition into blocks of the minimum frequency-transform block size (4×4 block size), detects edge information RecNormal [x,y] corresponding to the inside of each of the 4×4 blocks, and supplies the result to the edge information buffer 106. In other words, the edge information buffer 106 is caused to overwrite the edge information SrcNormal[x,y] corresponding to the input video of the PU partition with the edge information RecNormal[x,y] on the reconstructed image. FIG. 11 shows an exemplary case where edge information SrcNormal [x,y] is overwritten with edge information RecNormal [x,y] after 16×16 intra PU partitions located in the top-left part of the LCU is reconstructed. FIG. 11 is an explanatory diagram showing edge information stored in the edge information buffer 106 after the 16x16 intra PU partitions are reconstructed. In FIG. 11, the top-left part enclosed by the heavy line is the overwritten part.

The video encoding device in the exemplary embodiment applies the above-described operation to the remaining input images of the LCU.

Based on the operation described above, the video encoding device in the exemplary embodiment generates a bitstream.

### Exemplary Embodiment 2

The structure of a video encoding device in Exemplary Embodiment 2 is the same as the structure of the video encoding device in Exemplary Embodiment 1 shown in FIG. 1, but the video encoding device in this exemplary embodiment causes the encoding control unit 110 not to transmit the rem_intra_luma_pred_mode syntax in the information (prev_intra_luma_pred_flag and rem_intra_luma_pred_mode) associated with the intra prediction direction under specific conditions to be described below.

The specific conditions are such conditions that the intra prediction direction of the first category in Exemplary Embodiment 1 is DC and prev_intra luma_pred_flag is transmitted as 1 (i.e. conditions under which rem_intra_luma_pred_mode is not transmitted). In other words, it is the conditions under which an entropy decoder in a video decoding device understands that the intra prediction direction predicted based on the intra prediction directions of the blocks leftwardly and upwardly adjacent to the PU partition is DC, and that the predicted intra prediction direction of the DC is the intra prediction direction of the PU partition.

The encoding control unit 110 in the exemplary embodiment performs intra prediction by the intra prediction direction of the second category in Exemplary Embodiment 1 on a PU partition that falls under the above specific conditions to encode the PU partition.

The video encoding device in the exemplary embodiment can reduce the coded bit amount of the intra prediction mode in the bitstream while fulfilling the requirements for avoiding the influence of a block distortion and determining the memory allocation for storing edge information.

As described above, in the video encoding device according to the present invention, the encoding control unit 110 selects, based on edge information on each image block of the minimum frequency-transform block size, the number of intra prediction directions for each of which the prediction error is calculated to determine an intra prediction direction used to encode the intra block to be encoded. The position (inside position) of the image block of the minimum frequency-transform block size is a non-block boundary position and a determined position independent of the split block shape of the CU. The edge information on the image block of the minimum frequency-transform block size is free of the influence of any block distortion and the memory allocation of the edge information is determined.

In other words, the video encoding device according to the present invention can reduce a computation of the encoding control unit 110 by simplifying the memory allocation of edge information and the calculation of the edge information while reducing the coded bit amount of the intra prediction direction using edge information on the non-block boundary position.

Further, the video encoding device according to the present invention makes use of the fact that the memory allocation is determined to store edge information on each image block of the minimum frequency-transform block size in the edge information buffer 106. Since the stored edge information can be reused, the number of edge information detections can be reduced. In the case of the video encoding devices in the aforementioned exemplary embodiments, the number of detections of edge information per minimum frequency-transform block size is two (for the input image and the reconstructed image).

Further, since the video encoding device according to the present invention calculate the energy of the prediction error only for the selected intra prediction direction, the computation of the encoding control unit 110 that calculates the energy of the prediction error can be reduced. For example, in the case of the 8×8 intra PU partitions, the calculation of the energy of the prediction error only has to be made for up to seven types of intra prediction directions without the need to calculate the energy of the prediction error for 34 types of intra prediction directions.

In addition, since the video encoding device according to the present invention uses edge information to determine the split block shape of the largest coding unit to be encoded, the computation of the encoding control unit 110 that calculates the energy of the prediction error can be reduced. For example, the energy of the prediction error only has to be calculated for one split block shape pattern without the need to calculate the energy of the prediction error for a total of four split block shape patterns of 64 × 64, 32 × 32, 16 × 16, and 8 × 8.

### Exemplary Embodiment 3

FIG. 12 is a block diagram showing a video decoding device in Exemplary Embodiment 3. The video decoding device in this exemplary embodiment is a video decoding device for decoding a bitstream from the video encoding device in Exemplary Embodiment 2.

As shown in FIG. 12, the video decoding device in this exemplary embodiment includes an entropy decoding unit 202, an inverse transform/inverse quantization unit 203, an intra prediction unit 204, a decoding control unit 210, a switch 221, an edge detection unit 205, an edge information buffer 206, and an intra prediction direction selector 207.

The entropy decoding unit 202 entropy-decodes the bitstream, and outputs the split block shape (split_coding_unit_flag, mode_table_idx and intra_split_flag) of an LCU to be decoded, information (prev_intra_luma_pred_flag and rem_intra_luma_pred_mode) associated with the intra prediction direction, the block size (split_transform_unit_flag) of discrete cosine transform, and the transform quantization value.

The decoding control unit 210 monitors information associated with the intra prediction direction of a PU partition of a CU to be decoded to control the switch 221. When the intra prediction direction of the first category mentioned above is DC and prev_intra_luma_pred_flag is 1 (when the decoding control unit 210 unambiguously understands that the predicted intra prediction direction of the DC is the intra prediction direction of the PU partition), the intra prediction direction determined by the intra prediction direction selector 207 is supplied to the intra prediction unit 204. Otherwise, the intra prediction direction determined by prev_intra_luma_pred_flag and rem intra_luma_pred_mode is supplied to the intra prediction unit 204.

The intra prediction direction selector 207 selects and supplies, to the switch 221, the intra prediction direction of the second category described above.

Based on the intra prediction direction supplied through the switch 221, the intra prediction unit 204 uses the reconstructed image to generate an intra prediction signal for the PU partition of the CU to be decoded.

The inverse transform/inverse quantization unit 203 inverse-quantizes the transform quantization value supplied from the entropy decoding unit 202. Based on the discrete cosine transform of the block size determined by the entropy-decoding, the inverse transform/inverse quantization unit 203 further performs inverse frequency transform to return the result to the original spatial domain. The intra prediction signal is added to a reconstructed prediction error returned to the original spatial domain to obtain a reconstructed image of the PU partition of the CU to be decoded.

For decoding the subsequent image area, the edge detection unit 205 divides the reconstructed image Rec [x,y] of the PU partition of the CU to be decoded into blocks of the minimum frequency-transform block size (4×4 block size), detects edge information RecNormal [x,y] on a position corresponding to the inside of each of the 4×4 blocks, and supplies the result to the edge information buffer 206. The operation of the edge detection unit 205 is the same as the operation of the edge detection unit 105 in Exemplary Embodiment 1. The intra prediction direction selector 207 is the same as the intra prediction direction selector 107 in Exemplary Embodiment 1.

The edge information buffer 206 stores the edge information RecNormal [x,y] on the reconstructed image supplied from the edge detection unit 205.

The video decoding device in the exemplary embodiment applies the above-described operation to the remaining image areas of the LCU.

According the processing mentioned above, the video decoding device in the exemplary embodiment decompresses the bitstream.

As described above, the video decoding device according to the present invention determines an intra prediction direction used to encode an intra block to be encoded, based on edge information on an image block of the minimum frequency-transform block size. The position of the image block of the minimum frequency-transform block size (inside position) is a non-block boundary position and a determined position independent of the split block shape of the CU. The edge information on the image block of the minimum frequency-transform block size is free of the influence of any block distortion and the memory allocation of the edge information is determined.

In other words, the video decoding device according to the present invention can reduce a computation of the decoding control unit 210 by simplifying the memory allocation of edge information and the calculation of the edge information while reducing the coded bit amount of the intra prediction direction using edge information on the non-block boundary position.

The edge detection units in the video encoding device and the video decoding device in the aforementioned exemplary embodiments may use Prewitt operators based on a similar first derivation instead of the Sobel operators in calculating the gradient vector Grad [x,y] = (HEdge[x,y], VEdge [x,y]).

The edge detection units in the video encoding device and the video decoding device in the aforementioned exemplary embodiments may also calculate the gradient vector using Src' [x,y] or a reconstructed image Rec' [x,y] as a result of applying a low-pass filter to the input image Src [x,y] or the reconstructed image Rec[x,y] to have resistance to noise contained in the input image Src [x,y] or the reconstructed image Rec[x,y]. For example, a three-tap one-dimensional FIR filter with coefficients [1 2 1]/4 can be applied as the low-pass filter to the horizontal and vertical directions, respectively. A five-tap two-dimensional FIR filter based on a Gaussian filter can also be applied as the low-pass filter.

When the norm of the gradient vector Grad [x,y] = (HEdge [x,y], VEdge [x,y]) is smaller than a predetermined value, the edge detection units in the video encoding device and the video decoding device in the aforementioned exemplary embodiments may reset the gradient vector Grad[x,y] to zero vector to have resistance to noise contained in the input image Src [x,y] or the reconstructed image Rec [x,y]. For example, L1 norm or L2 norm can be used as the norm.

The intra prediction direction selectors in the video encoding device and the video decoding device in the aforementioned exemplary embodiments may select intra prediction directions corresponding to edge information on the largest norm as the intra prediction directions of the second category and the third category instead of the intra prediction directions corresponding to most frequently-appearing edge information. In the video encoding device and the video decoding device in the aforementioned exemplary embodiments where the minimum frequency-transform block size is set to 4 × 4, use of the edge information on the largest norm can reduce the data volume of edge information stored in the edge information buffer to one-quarter. This is because, among respective pieces of 2×2 edge information of the minimum frequency-transform block size, only edge information on the largest norm has to be stored as representative edge information. The reason is that edge information as the largest norm of multiple pieces of 2×2 edge information is identical to the representative edge information that is the largest norm in multiple pieces of representative edge information.

Each of the aforementioned exemplary embodiments can be implemented in hardware or in a computer program.

An information processing system shown in FIG. 13 includes a processor 1001, a program memory 1002, a storage medium 1003, and a storage medium 1004. The storage medium 1003 and the storage medium 1004 may be different storage media, or storage areas on the same storage medium. A magnetic medium such as a hard disk can be used as the storage medium.

In the information processing system shown in FIG. 13, a program for carrying out the function of each block (except the buffer block) shown in each of FIG. 1 and FIG. 12 is stored in the program memory 1002. The processor 1001 performs processing according to the program stored in the program memory 1002 to carry out the functions of the video encoding device or the video decoding device shown in FIG. 1 or FIG. 12, respectively.

FIG. 14 is a block diagram showing a main part of a video encoding device according to the present invention. As shown in FIG. 14, the video decoding device according to the present invention includes: intra prediction means 11 (the intra prediction unit 104 shown in FIG. 1 as an example) for performing intra prediction on an image; frequency transform/quantization means 12 (the transform/quantization unit 101 shown in FIG. 1 as an example) for frequency-transforming and quantizing a prediction error based on the intra prediction performed by the intra prediction means 11; entropy encoding means 13 (the entropy encoding unit 102 shown in FIG. 1 as an example) for entropy-encoding a transform quantization value generated by the frequency transform/quantization means 12 ; edge detection means 14 (the edge detection unit 105 shown in FIG. 1 as an example) for detecting edge information on an image block of the minimum frequency-transform block size of the image; and edge information storage means 15 (the edge information buffer 106 shown in FIG. 1 as an example) for storing the edge information detected by the edge detection means 14.

FIG. 15 is a block diagram showing a main part of a video decoding device according to the present invention. As shown in FIG. 15, the video decoding device according to the present invention includes entropy decoding means 21 (the entropy decoding unit 202 shown in FIG. 12 as an example) for entropy-decoding a transform quantization value; inverse quantization/inverse frequency transform means 22 (the inverse transform/inverse quantization unit 203 shown in FIG. 12 as an example) for inverse-quantizing the transform quantization value and performing inverse frequency transform thereof; intra prediction means 23 (the intra prediction unit 204 shown in FIG. 12 as an example) for performing intra prediction on an image; edge detection means 24 (the edge detection unit 205 shown in FIG. 12 as an example) for detecting edge information on an image block of the minimum frequency-transform block size of the image; and intra prediction direction selecting means 25 for selecting an intra prediction direction used to decode a block to be decoded, based on the edge information detected by the edge detection means 24.

FIG. 16 is a flowchart showing main steps of a video encoding method according to the present invention. As shown in FIG. 16, in the video encoding method according to the present invention, an intra prediction direction is selected (step S101), intra prediction is performed on an image (step S102), a prediction error based on the intra prediction is frequency-transformed and quantized to generate a transform quantization value (step S103), the transform quantization value is entropy-encoded (step S104), edge information on an image block of the minimum frequency-transform block size of the image is detected (step S105), and the detected edge information is stored in edge information storage means (step S106).

FIG. 17 is a flowchart showing main steps of a video decoding method according to the present invention. As shown in FIG. 17, in the video decoding method according to the present invention, a transform quantization value is entropy-decoded (step S201), the transform quantization value is inverse-quantized and inverse frequency transform thereof is performed (step S202), an intra prediction direction used to decode a block to be decoded is selected based on edge information previously detected (step S203), intra prediction is performed on an image (step S204), edge information on an image block of the minimum frequency-transform block size of the image is detected (step S205), and the detected edge information is stored in edge information storage means (step S206).

Part or all of the aforementioned exemplary embodiments can be described as the following Supplementary notes, but the structure of the present invention is not limited to the following structures.

### (Supplementary note 1)

A video encoding device including: intra prediction means for performing intra prediction on an image; frequency transform/quantization means for frequency-transforming and quantizing a prediction error based on the intra prediction performed by the intra prediction means; entropy encoding means for entropy-encoding a transform quantization value generated by the frequency transform/quantization means; edge detection means for detecting edge information on an image block of the minimum frequency-transform block size of the image; edge information storage means for storing the edge information detected by the edge detection means; and intra prediction direction selecting means for selecting an intra prediction direction used to encode a block to be encoded, based on edge information stored in the edge information storage means, wherein the intra prediction direction selecting means selects the intra prediction direction based on modes of edge information contained in two or more reconstructed images of the minimum frequency-transform block size adjacent to the block to be encoded.

### (Supplementary note 2)

A video encoding device including: intra prediction means for performing intra prediction on an image; frequency transform/quantization means for frequency-transforming and quantizing a prediction error based on the intra prediction performed by the intra prediction means; entropy encoding means for entropy-encoding a transform quantization value generated by the frequency transform/quantization means; edge detection means for detecting edge information on an image block of the minimum frequency-transform block size of the image; edge information storage means for storing the edge information detected by the edge detection means; and intra prediction direction selecting means for selecting an intra prediction direction used to encode a block to be encoded, based on edge information stored in the edge information storage means, wherein the intra prediction direction selecting means selects the intra prediction direction based on edge information on the largest norm among pieces of edge information contained in two or more reconstructed images of the minimum frequency-transform block size adjacent to the block to be encoded.

### (Supplementary note 3)

The video encoding device according to Supplementary note 1 or 2, further including encoding control means for performing intra prediction on the image in the intra prediction direction selected by the intra prediction direction selecting means under the condition that an entropy decoder in a video decoding device understands that a predicted intra prediction direction determined based on intra prediction directions of blocks leftwardly and upwardly adjacent to the block to be encoded is DC and that a predicted intra prediction direction of the DC is the intra prediction direction of the block to be encoded.

### (Supplementary note 4)

A video encoding device including: intra prediction means for performing intra prediction on an image; frequency transform/quantization means for frequency-transforming and quantizing a prediction error based on the intra prediction performed by the intra prediction means; entropy encoding means for entropy-encoding a transform quantization value generated by the frequency transform/quantization means; edge detection means for detecting edge information on an image block of the minimum frequency-transform block size of the image; edge information storage means for storing the edge information detected by the edge detection means; and encoding control means for determining a split block shape of a largest coding unit to be encoded, based on edge information stored in the edge information storage means, wherein the encoding control means determines the split block shape of the largest coding unit using a mode of stored edge information corresponding to an input image of the largest coding unit to be encoded.

### (Supplementary note 5)

A video decoding device including: entropy decoding means for entropy-decoding a transform quantization value; inverse quantization/inverse frequency transform means for inverse-quantizing the transform quantization value and performing inverse frequency transform thereof; intra prediction means for performing intra prediction on an image; edge detection means for detecting edge information on an image block of the minimum frequency-transform block size of the image; and intra prediction direction selecting means for selecting an intra prediction direction used to decode a block to be decoded, based on the edge information detected by the edge detection means, wherein the intra prediction direction selecting means selects an intra prediction direction based on modes of edge information contained in two or more reconstructed images of the minimum frequency-transform block size adjacent to the block to be decoded.

### (Supplementary note 6)

A video decoding device including: entropy decoding means for entropy-decoding a transform quantization value; inverse quantization/inverse frequency transform means for inverse-quantizing the transform quantization value and performing inverse frequency transform thereof; intra prediction means for performing intra prediction on an image; edge detection means for detecting edge information on an image block of the minimum frequency-transform block size of the image; and intra prediction direction selecting means for selecting an intra prediction direction used to decode a block to be decoded, based on the edge information detected by the edge detection means, wherein the intra prediction direction selecting means selects an intra prediction direction based on edge information on the largest norm among pieces of edge information contained in two or more reconstructed images of the minimum frequency-transform block size adjacent to the block to be decoded.

### (Supplementary note 7)

The video decoding device according to Supplementary note 5 or 6, further including decoding control means for performing intra prediction on the image in the intra prediction direction selected by the intra prediction direction selecting means under the condition that the entropy decoder understands that a predicted intra prediction direction determined based on intra prediction directions of blocks leftwardly and upwardly adjacent to the block to be decoded is DC and that a predicted intra prediction direction of the DC is is the intra prediction direction of the block to be decoded.

While the present invention has been described with reference to the exemplary embodiments and examples, the present invention is not limited to the aforementioned exemplary embodiments and examples. Various changes understandable to those skilled in the art within the scope of the present invention can be made to the structures and details of the present invention.

This application claims priority based on Japanese Patent Application No. 2010-290968, filed on December 27, 2010, the disclosures of which are incorporated herein in their entirety.

### Reference Signs List

- 11: intra prediction means
- 12: frequency transform/quantization means
- 13: entropy encoding means
- 14: edge detection means
- 15: edge information storage means
- 21: entropy decoding means
- 22: inverse quantization/inverse frequency transform means
- 23: intra prediction means
- 24: edge detection means
- 25: intra prediction direction selecting means
- 101: transform/quantization unit
- 102: entropy encoding unit
- 103: inverse transform/inverse quantization unit
- 104: intra prediction unit
- 105: edge detection unit
- 106: edge information buffer
- 107: intra prediction direction selector
- 110: encoding control unit
- 121: switch
- 202: entropy decoding unit
- 203: inverse transform/inverse quantization unit
- 204: intra prediction unit
- 205: edge detection unit
- 206: edge information buffer
- 207: intra prediction direction selector
- 210: decoding control unit
- 221: switch
- 1001: processor
- 1002: program memory
- 1003: storage medium
- 1004: storage medium

## Claims

1. A video encoding device comprising:
intra prediction means for performing intra prediction on an image;
frequency transform/quantization means for frequency-transforming and quantizing a prediction error based on the intra prediction performed by the intra prediction means;
entropy encoding means for entropy-encoding a transform quantization value generated by the frequency transform/quantization means;
edge detection means for detecting edge information on an image block of a minimum frequency-transform block size of the image; and
edge information storage means for storing the edge information detected by the edge detection means.

2. The video encoding device according to claim 1, further comprising intra prediction direction selecting means for selecting an intra prediction direction used to encode a block to be encoded, based on edge information stored in the edge information storage means.

3. The video encoding device according to claim 1, further comprising encoding control means for determining a split block shape of a largest coding unit to be encoded, based on edge information stored in the edge information storage means.

4. A video decoding device comprising:
entropy decoding means for entropy-decoding a transform quantization value;
inverse quantization/inverse frequency transform means for inverse-quantizing the transform quantization value and performing inverse frequency transform thereof;
intra prediction means for performing intra prediction on an image;
edge detection means for detecting edge information on an image block of a minimum frequency-transform block size of the image; and
intra prediction direction selecting means for selecting an intra prediction direction used to decode a block to be decoded, based on the edge information detected by the edge detection means.

5. A video encoding method comprising:
performing intra prediction on an image;
frequency-transforming and quantizing a prediction error based on the intra prediction to generate a transform quantization value;
entropy-encoding the transform quantization value;
detecting edge information on an image block of a minimum frequency-transform block size of the image; and
storing the detected edge information in edge information storage means.

6. The video encoding method according to claim 5, further comprising selecting an intra prediction direction used to encode a block to be encoded, based on edge information stored in the edge information storage means.

7. The video encoding method according to claim 5, further comprising determining a split block shape of a largest coding unit to be encoded, based on edge information stored in the edge information storage means.

8. A video decoding method comprising:
entropy-decoding a transform quantization value;
inverse-quantizing the transform quantization value and performing inverse frequency transform thereof;
performing intra prediction on an image;
detecting edge information on an image block of a minimum frequency-transform block size of the image; and
selecting an intra prediction direction used to decode a block to be decoded, based on the detected edge information.

9. A video encoding program for causing a computer to execute:
a process of performing intra prediction on an image;
a process of frequency-transforming and quantizing a prediction error based on the intra prediction to generate a transform quantization value;
a process of entropy-encoding the transform quantization value;
a process of detecting edge information on an image block of a minimum frequency-transform block size of the image; and
a process of storing the detected edge information in edge information storage means.

10. A video decoding program for causing a computer to execute:
a process of entropy-decoding a transform quantization value;
a process of inverse-quantizing the transform quantization value and performing inverse frequency transform thereof;
a process of performing intra prediction on an image;
a process of detecting edge information on an image block of a minimum frequency-transform block size of the image; and
a process of selecting an intra prediction direction used to decode a block to be decoded, based on the detected edge information.
